# EUROPÄISCHE PATENTSCHRIFT

(11) **EP 0 882 958 B1**
(45) Veröffentlichungstag und Bekanntmachung des Hinweises auf die Patenterteilung: **22.08.2007**
(21) Anmeldenummer: 98106075.9
(22) Anmeldetag: 02.04.1998
(51) Int. Cl.: G01F 23/296

(54) **Verfahren und Anordnung zur Überwachung eines vorbestimmten Füllstands in einem Behälter**
Method and device for monitoring a predetermined filling level in a container
Procédé et dispositif pour surveiller un niveau prédeterminé de remplissage dans un récipient

(30) Priorität: 05.05.1997 DE 19718965
(43) Veröffentlichungstag der Anmeldung: 09.12.1998
(73) Patentinhaber: Endress + Hauser GmbH + Co. KG, 79689 Maulburg (DE)
(72) Erfinder: Getman, Igor, Prof. Dr., 79540 Lörrach (DE); Lopatin, Sergej, Dr., 79539 Lörrach (DE)
(74) Vertreter: Andres, Angelika Maria

(56) Entgegenhaltungen:
- US-A- 3 748 635
- US-A- 4 299 114
- US-A- 4 610 164
- US-A- 5 269 188

## Beschreibung

Die Erfindung betrifft ein Verfahren zur Überwachung eines vorbestimmten Füllstands eines Füllguts in einem Behälter mit Hilfe von zwei Ultraschallwandlern, die auf der Höhe des zu überwachenden Füllstands derart am Behälter montiert sind, daß zwischen ihnen ein Zwischenraum besteht, in den das Füllgut eintritt, wenn dieses den zu überwachenden Füllstand erreicht, wobei der eine Ultraschallwandler ein Sendewandler ist, der in vorbestimmten Sendezeitpunkten zur Aussendung von Ultraschallimpulsen in den Zwischenraum erregt wird, während der andere Ultraschallwandler ein Empfangswandler ist, der empfangene Ultraschallimpulse in elektrische Empfangssignale umwandelt, durch deren Auswertung festgestellt wird, ob sich Füllgut im Zwischenraum zwischen den Ultraschallwandlern befindet. Die Erfindung betrifft ferner eine Anordnung zur Durchführung dieses Verfahrens.

Bei einem aus der US-PS 5 269 188 bekannten Verfahren dieser Art wird festgestellt, ob der Empfangswandler nach jedem Sendezeitpunkt ein Empfangssignal in einem Zeitabstand abgibt, der der Laufzeit der Ultraschallimpulse durch eine Flüssigkeit entspricht, die sich in dem Zwischenraum zwischen den Sensoren befindet. Zu diesem Zweck wird ein Hauptzeitfenster gebildet, in dem das Empfangssignal bei jeder in der Flüssigkeit vorkommenden Schallgeschwindigkeit erscheinen muß. Zusätzlich wird ein Testzeitfenster gebildet, das vor dem Hauptzeitfenster liegt und in dem ein Empfangssignal erscheint, wenn der Empfangswandler einen Ultraschallimpuls empfängt, der durch den Träger der beiden Wandler vom Sendewandler zum Empfangswandler übertragen worden ist. Dieser Test beruht darauf, daß die Schallgeschwindigkeit in dem Feststoff, aus dem der Träger besteht, größer als die Schallgeschwindigkeit in der Flüssigkeit ist. Das Vorhandensein oder Fehlen eines Empfangssignals im Hauptzeitfenster bei gleichzeitig vorhandenem Empfangssignal im Testzeitfenster wird als Kriterium dafür verwendet, ob Flüssigkeit im Zwischenraum vorhanden ist oder nicht. Für den Fall, daß sich im Zwischenraum keine Flüssigkeit, sondern Luft befindet, wird davon ausgegangen, daß kein Ultraschallimpuls durch den Zwischenraum zum Empfangswandler gelangt; dies trifft bei den üblicherweise angewendeten hohen Ultraschallfrequenzen auch zu.

Auch bei den aus anderen Druckschriften (WO 82/04122; GB-PS 1 578 031; US-PS 4 630 245) bekannten Verfahren ähnlicher Art wird als Kriterium dafür, ob der Zwischenraum zwischen den Ultraschallwandlern mit Flüssigkeit gefüllt ist oder nicht, festgestellt, ob Ultraschallimpulse in einem der Laufzeit der Ultraschallimpulse durch die Flüssigkeit entsprechenden Zeitabstand nach jedem Sendezeitpunkt am Empfangswandler eintreffen.

Die Anwendung dieser bekannten Verfahren ist daher auf die Überwachung des Füllstands von Flüssigkeiten mit entsprechenden Ultraschall-Übertragungseigenschaften beschränkt. Schwierigkeiten können beispielsweise entstehen, wenn die zu überwachende Flüssigkeit stark mit Luftblasen durchsetzt ist. Ferner können mit diesen bekannten Verfahren keine Füllgüter überwacht werden, die keine Ultraschallwellen übertragen; dies gilt insbesondere für fließfähige (pulverförmige oder feinkörnige) Feststoffe, wie Mehl, Sand oder dergleichen.

In der Patentschrift US 3,748,635 wird beschrieben, wie die Anwesenheit von Flüssigkeit in einem Zwischenraum erkannt wird. Hierfür wird ein Ultraschallimpuls erzeugt und nach dem Passieren durch den Zwischenraum empfangen. Ist der Zeitabstand zwischen dem Senden und dem Empfangen innerhalb eines bestimmten Bereichs, so bedeutet dies, dass sich ein Medium in dem Zwischenraum befindet. Es findet also eine direkte Zuordnung zwischen dem Auftreten eines Signals in einem Zeitfenster und dem Vorliegen eines Mediums statt. Es wird weiterhin angegeben, dass die Laufzeiten in Flüssigkeiten bzw. in Luft unterschiedlich sind und dass mit zunehmender Frequenz des Ultraschallsignals die Dämpfung in Luft zunimmt.

Aufgabe der Erfindung ist die Schaffung eines Verfahrens der eingangs angegebenen Art, das die Überwachung des Füllstands unabhängig von den Ultraschall-Übertragungseigenschaften des Füllguts ermöglicht.

Nach der Erfindung wird diese Aufgabe dadurch gelöst, daß der Sendewandler zur Aussendung von Ultraschallimpulsen mit einer Frequenz erregt wird, die so niedrig ist, daß die Ultraschallimpulse auch dann durch den Zwischenraum zu dem Empfangswandler übertragen werden, wenn der Zwischenraum mit Luft gefüllt ist, dass ein Zeitfenster geöffnet wird, innerhalb dessen ein Zeitpunkt eines Einstreffens eines Empfansgssignals bei Schallgeschwindigkeit in der luft liegt und außerhalb dessen ein Zeitpunkt eines Eintreffens eines Empfangssignals bei Schallgeschwindigkeit im Füllgut liegt, und daß festgestellt wird, ob der Empfangswandler nach jedem Sendezeitpunkt ein Empfangssignal in einem Zeitabstand abgibt, der der Laufzeit der Ultraschallimpulse vom Sendewandler zum Empfangswandler in Luft entspricht.

Bei dem erfindungsgemäßen Verfahren wird das Eintreffen von durch Luft im Zwischenraum übertragenen Ultraschallimpulsen als Kriterium dafür ausgewertet, ob der Zwischenraum mit Luft oder mit dem Füllgut gefüllt ist. Dies ist möglich, wenn die Frequenz der Ultraschallwellen ausreichend niedrig ist, vorzugsweise kleiner als etwa 300 kHz, weil Ultraschallwellen so niedriger Frequenz auch durch Luft noch mit ausreichender Amplitude übertragen werden. Die durch Luft übertragenen Ultraschallimpulse können aufgrund der längeren Laufzeit eindeutig von den durch eine Flüssigkeit übertragenen Ultraschallimpulsen unterschieden werden. Sie ermöglichen die Überwachung des Füllstands auch dann, wenn das Füllgut Ultraschallwellen nicht überträgt, also beispielsweise im Fall von pulverförmigen oder feinkörnigen Feststoffen.

Wenn das Füllgut eine Flüssigkeit ist, besteht eine vorteilhafte Weiterbildung des erfindungsgemäßen Verfahrens darin, daß zusätzlich festgestellt wird, ob der Empfangswandler nach jedem Sendezeitpunkt ein Empfangssignal in einem Zeitabstand abgibt, der der Laufzeit der Ultraschallimpulse vom Sendewandler zum Empfangswandler in der Flüssigkeit entspricht. Durch diese Maßnahme wird eine hohe Fehlersicherheit erreicht, weil sowohl bei leerem als auch bei gefülltem Zwischenraum in jeder Sendeperiode ein Empfangssignal vorhanden sein muß, das den bestehenden Zustand anzeigt.

Wenn dagegen das Füllgut so beschaffen ist, daß es keine Ultraschallwellen überträgt, kann die Fehlersicherheit dadurch erhöht werden, daß zusätzlich festgestellt wird, ob der Empfangswandler nach jedem Sendezeitpunkt ein Empfangssignal in einem Zeitabstand abgibt, der der Laufzeit der Ultraschallimpulse vom Sendewandler zum Empfangswandler über den Träger der beiden Wandler entspricht.

Eine Anordnung zur Durchführung des Verfahrens nach der Erfindung mit zwei Ultraschallwandlern, die auf der Höhe des zu überwachenden Füllstands derart am Behälter montiert sind, daß zwischen ihnen ein Zwischenraum besteht, in den das Füllgut eintritt, wenn dieses den zu überwachenden Füllstand erreicht, wobei der eine Ultraschallwandler ein Sendewandler ist, der so ausgebildet und angeordnet ist, daß er bei Erregung durch einen elektrischen Wechselspannungsimpuls einen Ultraschallimpuls in den Zwischenraum aussendet, während der andere Ultraschallwandler ein Empfangswandler ist, der so ausgebildet und angeordnet ist, daß er vom Sendewandler ausgesendete und über den Zwischenraum übertragene Ultraschallimpulse in elektrische Empfangssignale umwandelt, mit einer Erregungsschaltung, die den Sendewandler in vorbestimmten Sendezeitpunkten zur Aussendung von Ultraschallimpulsen erregt, und mit einer Auswerteschaltung, die die vom Empfangswandler gelieferten elektrischen Empfangssignale auswertet, um festzustellen, ob der Zwischenraum mit Füllgut gefüllt ist oder nicht, ist nach der Erfindung dadurch gekennzeichnet, daß die Erregungsschaltung den Sendewandler zur Aussendung von Ultraschallimpulsen mit einer Frequenz erregt, die so niedrig ist, daß die Ultraschallimpulse auch dann durch den Zwischenraum zu dem Empfangswandler übertragen werden, wenn der Zwischenraum mit Luft gefüllt ist, dass eine Torschaltung vorgesehen ist, welche ein Zeifenster öffnet, innerhalb dessen ein Zeitpunkt eines Eintreffens einer Empfangssignals bei Shallgesöherindigkeit in der luft liegt und außerhalb dessen ein Zeitpunkt eines Eintreffens eines Empfangssignals bei Shallgeschwindigheit im Füllgut liegt, und daß die Auswerteschaltung eine Einrichtung enthält, die feststellt, ob der Empfangswandler nach jedem Sendezeitpunkt ein Empfangssignal in einem Zeitabstand abgibt, der der Laufzeit der Ultraschallimpulse vom Sendewandler zum Empfangswandler in Luft entspricht.

Eine vorteilhafte Ausgestaltung dieser Anordnung besteht darin, daß die beiden Ultraschallwandler piezoelektrische Wandler sind, die aus einer porösen piezoelektrischen Keramik mit der Konnektivität 3-3 bestehen. Solche Ultraschallwandler können mit verhältnismäßig kleinen Abmessungen in dem erforderlichen niederfrequenten Ultraschallfrequenzbereich von etwa 100 bis 300 kHz arbeiten. Sie erfordern ferner keine Anpaßschicht.

Weitere Merkmale und Vorteile der Erfindung ergeben sich aus der folgenden Beschreibung von Ausführungsbeispielen anhand der Zeichnung. In der Zeichnung zeigen:
Figur 1 eine Anordnung zur Überwachung eines vorbestimmten Füllstands in einem Behälter gemäß der Erfindung,
Figur 2 das Blockschaltbild einer Ausführungsform der Erregungsschaltung und der Auswerteschaltung der Anordnung von Figur 1 für den Fall, daß das zu überwachende Füllgut eine Flüssigkeit ist,
Figur 3 Zeitdiagramme zur Erläuterung der Funktionsweise der Anordnung von Figur 2,
Figur 4 das Blockschaltbild einer abgeänderten Ausführungsform der Erregungsschaltung und der Auswerteschaltung der Anordnung von Figur 1 und
Figur 5 Zeitdiagramme zur Erläuterung der Funktionsweise der Anordnung von Figur 4.

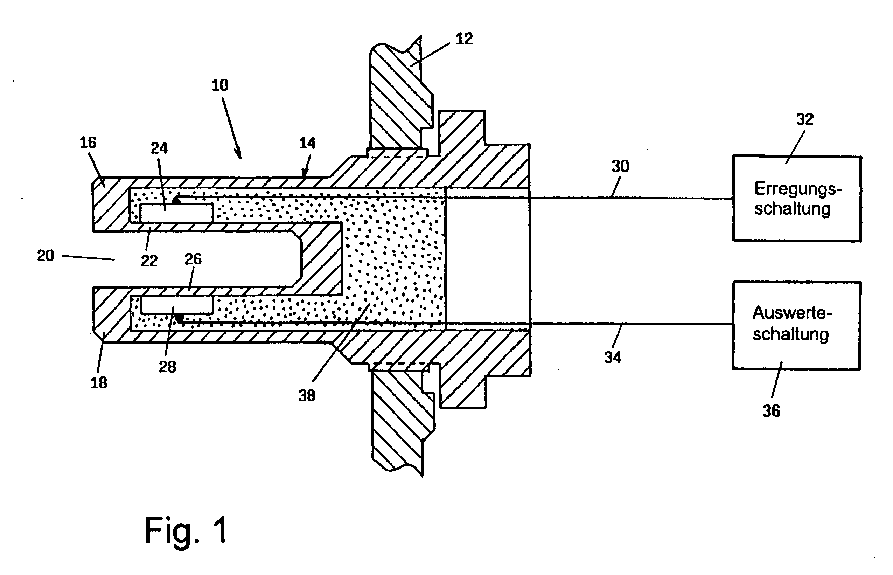

Die in Fig. 1 dargestellte Anordnung zur Überwachung eines vorbestimmten Füllstands eines Füllguts in einem Behälter enthält einen Sensor 10, der in eine Öffnung einer Wand 12 des Behälters so eingesetzt ist, daß er in das Innere des Behälters ragt. Der Sensor 10 hat ein Gehäuse 14, dessen im Inneren des Behälters liegender Teil zwei parallele Gehäuseabschnitte 16, 18 bildet, zwischen denen ein Zwischenraum 20 besteht. In dem Gehäuseabschnitt 16 ist an der an den Zwischenraum 20 angrenzenden Wand 22 ein Ultraschallwandler 24 angebracht, und in dem Gehäuseabschnitt 18 ist an der an den Zwischenraum 20 angrenzenden Wand 26 ein Ultraschallwandler 28 so angebracht, daß er dem Ultraschallwandler 24 gegenüberliegt. Der Ultraschallwandler 24 dient als Sendewandler und ist durch eine Leitung 30 mit einer außerhalb des Behälters angeordneten Erregungsschaltung 32 verbunden. Der Ultraschallwandler 28 dient als Empfangswandler und ist durch eine Leitung 34 mit einer außerhalb des Behälters angeordneten Auswerteschaltung 36 verbunden. In das Innere des Gehäuses 14 ist eine Vergußmasse 38 eingebracht, in die die Ultraschallwandler 24, 28 eingebettet sind. Das Gehäuse 14, das als Träger der beiden Ultraschallwandler 24 und 28 dient, kann aus Metall oder aus Kunststoff bestehen.

Der Sensor 10 ist auf der Höhe des zu überwachenden Füllstands so am Behälter montiert, daß der Zwischenraum 20 mit dem Füllgut gefüllt ist, wenn der zu überwachende Füllstand erreicht oder überschritten ist, während der Zwischenraum 20 mit Luft gefüllt ist, wenn der zu überwachende Füllstand nicht erreicht ist.

Die Erregungsschaltung 32 erzeugt elektrische Sendeimpulse, die an den Ultraschallwander 24 angelegt werden. Der Ultraschallwander 24 wird durch jeden elektrischen Sendeimpuls zu Ultraschallschwingungen angeregt, die die Frequenz des elektrischen Sendeimpulses haben, und er ist so ausgebildet und angeordnet, daß er eine impulsförmige Ultraschallwelle mit dieser Frequenz in den Zwischenraum 20 aussendet. Der Empfangswandler 28 ist so ausgebildet und angeordnet, daß er jeden vom Sendewandler 24 kommenden Ultraschallimpuls in ein elektrisches Empfangssignal der gleichen Frequenz umwandelt, das der Auswerteschaltung 36 zugeführt wird.

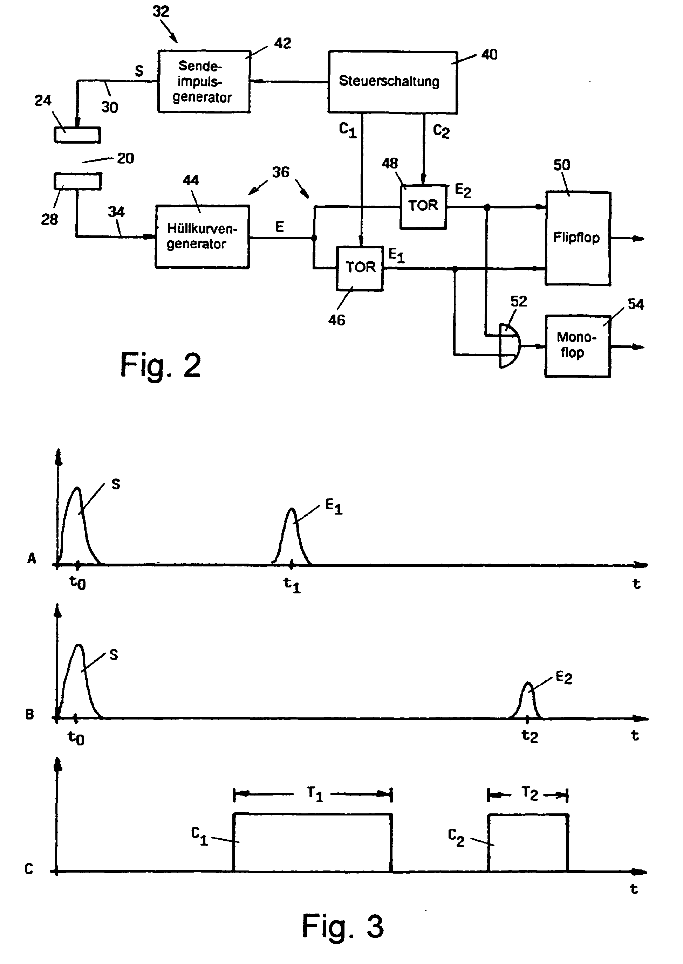

Fig. 2 zeigt ein Ausführungsbeispiel der Erregungsschaltung 32 und der Auswerteschaltung 36 für den Fall, daß das Füllgut im Behälter eine Flüssigkeit ist. Diese Figur zeigt wieder schematisch den Sendewandler 24 und den Empfangswandler 28, die zu beiden Seiten des Zwischenraums 20 angeordnet sind. Eine Steuerschaltung 40 steuert den Ablauf der Operationen in der Erregungsschaltung 32 und in der Auswerteschaltung 36. Die Erregungsschaltung 32 enthält einen Sendeimpulsgenerator 42, der einen mit der Steuerschaltung 40 verbundenen Auslöseeingang hat und an dessen Ausgang der Sendewandler 24 über die Leitung 30 angeschlossen ist. Die Steuerschaltung 40 schickt periodische Auslöseimpulse zum Sendeimpulsgenerator 42, der bei jedem Auslöseimpuls einen elektrischen Sendeimpuls S mit der Frequenz der auszusendenden Ultraschallwelle an den Sendewandler 24 anlegt, der dadurch zur Aussendung eines Ultraschallimpulses mit dieser Frequenz angeregt wird.

Bekanntlich ist die Reichweite von Ultraschallwellen hoher Frequenz (etwa 2 MHz) in Luft sehr begrenzt, während sich solche Ultraschallwellen in Flüssigkeiten gut ausbreiten. Würden Ultraschallwellen so hoher Frequenz bei der Anordnung von Fig. 1 angewendet werden, so würden die vom Sendewandler 24 ausgesendeten Ultraschallimpulse nur dann zum Empfangswandler 28 gelangen, wenn der Zwischenraum 20 mit Flüssigkeit gefüllt wäre, wogegen der Empfangswandler 28 keine Ultraschallimpulse empfangen würde, wenn der Zwischenraum 20 mit Luft gefüllt wäre. Desgleichen würde der Empfangswandler 28 keine Ultraschallimpulse so hoher Frequenz empfangen, wenn die Flüssigkeit mit Luftblasen durchsetzt wäre.

Erfindungsgemäß ist jedoch die Frequenz der vom Sendeimpulsgenerator 42 erzeugten Sendeimpulse so niedrig, daß die vom Sendewandler 24 ausgesendeten Ultraschallimpulse gleicher Frequenz auch dann den Empfangswandler 28 erreichen, wenn sich im Zwischenraum 20 nur Luft befindet oder die Flüssigkeit mit Luftblasen durchsetzt ist. Der Empfangswandler 28 empfängt somit Ultraschallimpulse sowohl dann, wenn der Zwischenraum 20 mit Luft gefüllt ist, als auch dann, wenn er mit Flüssigkeit gefüllt ist. Dies ist dann der Fall, wenn die Frequenz der Ultraschallwellen kleiner als etwa 300 kHz ist. Vorzugsweise liegt die Frequenz der Ultraschallimpulse im Bereich von etwa 100 bis 300 kHz. Bei diesen Frequenzen erreichen die Ultraschallimpulse den Empfangswandler 28 durch den mit Luft gefüllten Zwischenraum 20 noch mit ausreichender Intensität, wenn der Abstand zwischen dem Sendewandler 24 und dem Empfangswandler 28 einige Zentimeter beträgt. Bei einer Frequenz von 200 kHz liegt der Abstand vorzugsweise zwischen 1 cm und 3 cm.

Damit die Auswerteschaltung 36 erkennen kann, ob der zu überwachende Füllstand erreicht ist, wird die Tatsache ausgenutzt, daß sich Ultraschallwellen in einer Flüssigkeit schneller ausbreiten als in Luft. Die Auswerteschaltung 36 ist daher so ausgebildet, daß sie aufgrund des Zeitpunkts des Eintreffens eines Ultraschallimpulses am Empfangswandler 28 ermitteln kann, ob der zu überwachende Füllstand erreicht ist oder nicht. Dies kann beispielsweise durch die in Fig. 2 dargestellte Ausführungsform der Auswerteschaltung 36 erreicht werden.

Die am Empfangswandler 28 eintreffenden Ultraschallimpulse werden von diesem in elektrische Empfangssignale umgewandelt, die über die Leitung 34 zur Auswerteschaltung 36 übertragen werden. Die Auswerteschaltung 36 enthält einen Hüllkurvengenerator 44, der am Eingang die vom Empfangswandler 28 kommenden elektrischen Empfangssignale empfängt und am Ausgang für jedes Empfangssignal ein dessen Hüllkurve darstellendes Signal E abgibt. Der Ausgang des Hüllkurvengenerators 44 ist parallel mit den Eingängen von zwei Torschaltungen 46, 48 verbunden, die durch Steuersignale C₁ bzw. C₂, die von der Steuerschaltung 40 geliefert werden, geöffnet und geschlossen werden. Die Ausgänge der beiden Torschaltungen 46 und 48 sind mit zwei Eingängen eines Flipflops 50 verbunden, das durch ein über die Torschaltung 46 übertragenes Signal in den einen und durch ein über die Torschaltung 48 übertragenes Signal in den entgegengesetzten Zustand gebracht wird. Ferner sind die Ausgänge der beiden Torschaltungen 46 und 48 mit den beiden Eingängen einer ODER-Schaltung 52 verbunden, an deren Ausgang der Eingang eines wiederauslösbaren Monoflops 54 angeschlossen ist.

Die Funktionsweise der beschriebenen Anordnung wird anhand der Zeitdiagramme von Fig. 3 erläutert. Das Diagramm A zeigt einen Sendeimpuls S, der im Zeitpunkt t₀ ausgesendet wird, und das entsprechenden Empfangssignal E₁, das vom Empfangswandler 28 im Zeitpunkt t₁ abgegeben wird, wenn der Zwischenraum 20 mit Flüssigkeit gefüllt ist.

Das Diagramm B zeigt wieder den im Zeitpunkt to ausgesendeten Sendeimpuls S und das entsprechende Empfangssignal E₂, das vom Empfangswandler 28 im Zeitpunkt t₂ abgegeben wird, wenn der Zwischenraum 20 mit Luft gefüllt ist. Der Zeitpunkt t₂ liegt in einem größeren Zeitabstand hinter dem Sendezeitpunkt t₀ als der Zeitpunkt t₁.

Schließlich zeigt das Diagramm C von Fig. 3 die Steuersignale C₁ und C₂, die die Steuerschaltung 40 an die Torschaltungen 46 bzw. 48 anlegt. Das Steuersignal C₁ öffnet die Torschaltung 46 während eines Zeitfensters T₁, in welchem der Zeitpunkt t₁ liegt. Das Zeitfenster T₁ ist so groß bemessen, daß dann, wenn der Zwischenraum 20 mit Flüssigkeit gefüllt ist, der Zeitpunkt t₁ des Eintreffens des Empfangssignals E₁ bei allen vorkommenden Schallgeschwindigkeiten in der Flüssigkeit innerhalb des Zeitfensters T₁ liegt. Änderungen der Schallgeschwindigkeit in der Flüssigkeit können durch Temperaturänderungen verursacht werden, aber auch durch die Bildung von Luftblasen in der Flüssigkeit.

In entsprechender Weise ist das Zeitfenster T₂ so groß bemessen, daß dann, wenn der Zwischenraum 20 mit Luft gefüllt ist, der Zeitpunkt t₂ des Eintreffens des Empfangssignals E₂ bei allen vorkommenden Schallgeschwindigkeiten in der Luft innerhalb des Zeitfensters T₂ liegt. Änderungen der Schallgeschwindigkeit in der Luft werden in erster Linie durch Temperaturänderungen verursacht.

Die Zeitfenster T₁ und T₂ dürfen sich nicht überlappen. Diese Bedingung kann wegen des beträchtlichen Unterschieds der Schallgeschwindigkeiten in Flüssigkeit einerseits und in Luft andererseits leicht erfüllt werden.

Wenn somit ein Empfangssignal E₁ innerhalb des Zeitfensters T₁ eintrifft, wird es über die geöffnete Torschaltung 46 übertragen, und es bringt das Flipflop 50 in einen seiner beiden Zustände, in welchem sein Ausgangssignal anzeigt, daß der Zwischenraum 20 mit Flüssigkeit gefüllt ist und demzufolge der zu überwachende Füllstand erreicht oder überschritten ist. Wenn dagegen ein Empfangssignal E₂ innerhalb des Zeitfensters T₂ eintrifft, wird es über die geöffnete Torschaltung 48 übertragen, und es bringt das Flipflop 50 in den anderen Zustand, in welchem sein Ausgangssignal anzeigt, daß der Zwischenraum 20 mit Luft gefüllt ist und demgemäß der zu überwachende Füllstand nicht erreicht ist.

Ferner wird jedes über eine der Torschaltungen 46 oder 48 übertragene Empfangssignal E₁ bzw. E₂ über die ODER-Schaltung 52 an das wiederauslösbare Monoflop 54 angelegt. Die Haltezeit des Monoflops 54 ist größer als die Periode der Sendeimpulse S, so daß innerhalb der Haltezeit wenigstens ein Empfangssignal E₁ oder E₂ eine Wiederauslösung des Monoflops 54 bewirkt. Das Monoflop 54 behält dann seinen Arbeitszustand bei, und das Ausgangssignal des Monoflops 54 zeigt an, daß die Anordnung einwandfrei arbeitet. Wenn dagegen innerhalb der Haltezeit keine Empfangssignale E₁ oder E₂ am Monoflop eintreffen, fällt dieses in den Ruhezustand zurück, in dem sein Ausgangssignal einen Fehlerzustand anzeigt. Vorzugsweise ist die Haltezeit des Monoflops 54 ein Mehrfaches der Dauer der Sendeimpulsperiode, so daß die Fehlermeldung erst dann erfolgt, wenn die Empfangssignale in mehreren aufeinanderfolgenden Sendeperioden ausgefallen sind.

Wenn das Füllgut im Behälter keine Flüssigkeit ist, sondern ein fließfähiger (pulverförmiger oder feinkörniger) Feststoff, wie Mehl, Sand oder dgl., werden auch bei der angewendeten niedrigen Frequenz keine Ultraschallimpulse durch den Zwischenraum 20 übertragen, wenn dieser mit dem Feststoff gefüllt ist. Ein wesentlicher Vorteil des beschriebenen Verfahrens besteht darin, daß auch in diesem Fall eindeutig festgestellt werden kann, ob der zu überwachende Füllstand erreicht ist oder nicht. Wenn nämlich nach der Aussendung eines Ultraschallimpulses in einem Zeitabstand, der der Laufzeit des Ultraschallimpulses in Luft entspricht, vom Empfangswandler 28 ein Empfangssignal geliefert wird, bedeutet dies, daß der Zwischenraum 20 mit Luft gefüllt ist, daß also der zu überwachende Füllstand nicht erreicht ist. Wenn dagegen vom Empfangswandler 28 in diesem Zeitabstand nach dem Sendezeitpunkt kein Empfangssignal geliefert wird, bedeutet dies, daß der Zwischenraum 20 nicht mit Luft gefüllt ist und somit der zu überwachende Füllstand erreicht oder überschritten ist.

Damit in diesem Fall unterschieden werden kann, ob das Ausbleiben eines Empfangssignals durch das Erreichen des zu überwachenden Füllstands oder durch einen Fehlerzustand verursacht wird, muß eine zusätzliche Fehlerkontrolle vorgenommen werden. Auch diese Fehlerkontrolle kann durch die Feststellung des Zeitpunkts des Eintreffens von Empfangssignalen erfolgen, wenn der Träger der Ultraschallwandler so ausgebildet ist, daß die vom Sendewandler 24 erzeugten Ultraschallimpulse direkt über den Träger zum Empfangswandler 28 gelangen. Dies ist beispielsweise bei dem in Fig. 1 dargestellten Ausführungsbeispiel des Sensors 10 der Fall, bei dem die Ultraschallimpulse vom Sendewandler 24 zum Empfangswandler 28 nicht nur durch den Luftspalt 20, sondern auch über die Wände 22 und 26 des Gehäuses 14 laufen, das aus Metall oder Kunststoff besteht und den Träger der Ultraschallwandler bildet. Bei der in Fig. 1 gezeigten Ausbildung des Gehäuses treffen diese Ultraschallimpulse trotz des etwas längeren Weges am Empfangswandler 28 früher ein als Ultraschallimpulse, die durch Luft im Zwischenraum 20 übertragen werden, weil die Schallgeschwindigkeit in Metall oder Kunststoff wesentlich größer als die Schallgeschwindigkeit in Luft ist.

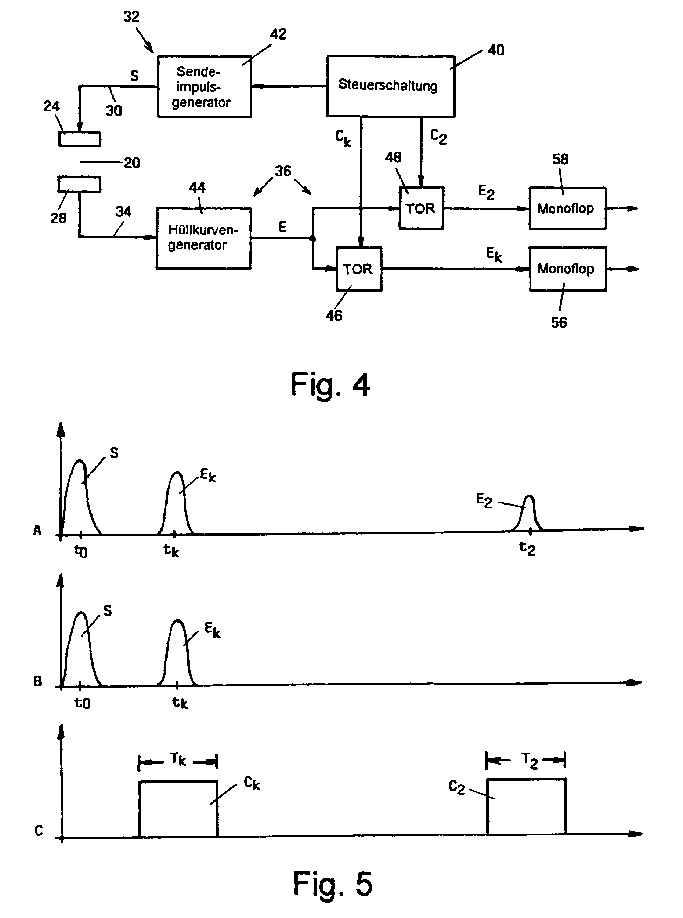

Die Überwachung eines vorbestimmten Füllstands eines fließfähigen Feststoffs kann daher mit dem Sensor 10 von Fig. 1 ohne konstruktive Abänderung erfolgen; es muß lediglich die Auswerteschaltung 36 geringfügig abgeändert werden. Fig. 4 zeigt ein Ausführungsbeispiel der Auswerteschaltung 36, die diese Überwachung ermöglicht.

In Fig. 4 sind die Schaltungsbestandteile, die denjenigen des Ausführungsbeispiels von Fig. 2 entsprechen, mit den gleichen Bezugszeichen wie dort bezeichnet; diese Schaltungsbestandteile werden nicht nochmals erläutert. Gegenüber dem Ausführungsbeispiel von Fig. 2 bestehen nur die folgenden Unterschiede:
- an den Ausgang jeder Torschaltung 46 und 48 ist ein wiederauslösbares Monoflop 56 bzw. 58 angeschlossen, dessen Haltezeit größer als die Periodendauer der Sendeimpulse S ist;
- die Torschaltung 56 wird von der Steuerschaltung 40 durch ein Steuersignal Cₖ für die Dauer eines Zeitfensters geöffnet, in welchem ein über das Gehäuse 14 übertragener Sendeimpuls am Empfangswandler 28 eintrifft.

Die Funktionsweise der Anordnung mit der Auswerteschaltung von Fig. 4 wird an Hand der Zeitdiagramme von Fig. 5 erläutert. Das Diagramm A zeigt einen Sendeimpuls S, der im Zeitpunkt t₀ ausgesendet wird, das Empfangssignal Eₖ, das dem Ultraschallimpuls entspricht, der über das Gehäuse 14 zum Empfangswandler 28 übertragen wird und an diesem im Zeitpunkt tₖ eintrifft, und das Empfangssignal E₂, das dem Ultraschallimpuls entspricht, der über den Zwischenraum 20 zum Empfangswandler 28 übertragen wird, wenn dieser mit Luft gefüllt ist, und der im Zeitpunkt t₂ am Empfangswandler 28 eintrifft. Der vorhandene Empfangsimpuls E₂ zeigt an, daß der zu überwachende Füllstand nicht erreicht ist.

Das Diagramm B zeigt die entsprechenden Impulse für den Fall, daß der Zwischenraum 20 mit dem fließfähigen Feststoff gefüllt ist. In diesem Fall trifft am Empfangswandler 28 nur der über das Gehäuse 14 übertragene Ultraschallimpuls ein, für den das Empfangssignal Eₖ abgegeben wird, während das Empfangssignal E₂ fehlt. Das vorhandene Empfangssignal Eₖ zeigt an, daß das System richtig arbeitet, und das Fehlen des Empfangssignals E₂ zeigt an, daß der zu überwachende Füllstand nicht erreicht ist.

Das Diagramm C von Fig. 5 zeigt die Steuersignale Cₖ und C₂, die die Steuerschaltung 40 an die Torschaltungen 46 bzw. 48 anlegt. Das Steuersignal Cₖ öffnet die Torschaltung 46 während eines Zeitfensters Tₖ, in welchem der Zeitpunkt tₖ liegt. Das Steuersignal C₂ hat die gleiche Wirkung wie im Fall von Fig. 2 und 3; es öffnet die Torschaltung 48 während eines Zeitfensters T₂, in welchem dann, wenn der Zwischenraum 20 mit Luft gefüllt ist, bei allen vorkommenden Schallgeschwindigkeiten in Luft der Zeitpunkt t₂ der Abgabe des Empfangssignals E₂ liegt.

Wenn somit ein Empfangssignal E₂ innerhalb des Zeitfensters T₂ eintrifft, wird es über die Torschaltung 48 zu dem Monoflop 58 übertragen, das dadurch in den Arbeitszustand gebracht oder, falls es bereits im Arbeitszustand war, durch Wiederauslösung innerhalb seiner Haltezeit im Arbeitszustand gehalten wird. In diesem Zustand zeigt das Ausgangssignal des Monoflops 58 an, daß der Zwischenraum 20 mit Luft gefüllt ist und somit der zu überwachende Füllstand nicht erreicht ist. Wenn dagegen innerhalb der Haltezeit keine Empfangssignale E₂ mehr eintreffen, fällt das Monoflop 58 nach dem Ende der Haltezeit ab, und sein Ausgangssignal nimmt den entgegengesetzten Zustand an, der anzeigt, daß der Zwischenraum 20 mit dem Füllgut gefüllt ist und somit der zu überwachende Füllstand erreicht oder überschritten ist.

Solange wie das System fehlerfrei arbeitet, wird in jeder Sendeperiode ein Empfangssignal Eₖ innerhalb des Zeitfensters Tₖ über die Torschaltung 46 zum Monoflop 56 übertragen, das dadurch dauernd in seinem Arbeitszustand gehalten wird, in dem sein Ausgangssignal den fehlerfreien Betrieb anzeigt. Wenn infolge eines Fehlers der Empfangswandler 28 keine Empfangssignale Eₖ mehr abgibt, fällt das Monoflop 56 nach dem Ende der Haltezeit ab, und sein Ausgangssignal zeigt das Bestehen eines Fehlerzustands an. Das Monoflop 56 erfüllt somit die gleiche Funktion wie das Monoflop 54 von Fig. 2.

Vorzugsweise ist die Haltezeit jedes der Monoflops 56 und 58 ein Mehrfaches der Dauer der Sendeimpulsperiode, um zu vermeiden, daß durch sporadische Ausfälle einzelner Impulse eine Änderung der Füllstandsanzeige oder eine Fehlermeldung erfolgt.

Je nach der Ausbildung des Trägers der Ultraschallwandler 24 und 28 ist es auch möglich, daß der Weg der über den Träger übertragenen Ultraschallimpulse so lang ist, daß das Empfangssignal Eₖ erst nach dem durch Luft übertragenen Empfangssignal E₂ eintrifft. Dies ist günstig, weil das zur Fehlerkontrolle dienende Empfangssignal Eₖ je nach dem Aufbau der Vorrichtung zeitlich sehr ausgedehnt sein kann. Ein Grund hierfür sind beispielsweise Mehrfachreflexionen, die zur Folge haben, daß auf das eigentliche Fehlerkontrollsignal, das durch den ersten über den Träger empfangenen Ultraschallimpuls gebildet ist, noch Störsignale folgen. Wenn das Fehlerkontrollsignal vor dem Empfangssignal E₂ eintrifft, besteht die Möglichkeit, daß sich diese Störsignale bis in den Bereich des Zeitfensters T₂ erstrecken und die Auswertung des Empfangssignals E₂ erschweren oder sogar ein nicht vorhandenes Empfangssignal E₂ vortäuschen, was zu einer Fehlanzeige führen würde. Dies kann dadurch vermieden werden, daß der Träger so ausgebildet wird, daß die Laufzeit der über den Träger übertragenen Ultraschallimpulse so groß wird, daß diese stets nach den durch Luft im Zwischenraum 20 übertragenen Ultraschallimpulsen am Empfangswandler 28 eintreffen. Bei dem dargestellten Ausführungsbeispiel, bei dem der Träger durch das Gehäuse 14 gebildet ist, kann dies beispielsweise durch eine größere Länge der beiden Gehäuseabschnitte 16 und 18 erreicht werden. Natürlich muß dann die Steuerschaltung 40 die Torschaltung 46 so steuern, daß das Zeitfenster Tₖ hinter dem Zeitfenster T₂ liegt.

Es ist auch möglich, die beiden zuvor beschriebenen Ausführungsformen zu kombinieren, indem das Eintreffen von Empfangssignalen in allen drei Zeitfenstern T₁, T₂ und Tₖ geprüft wird. Die gleiche Anordnung kann dann ohne Änderung für die Überwachung des Füllstands von Flüssigkeiten und von fließfähigen Feststoffen verwendet werden. Besonders in diesem Fall ist es vorteilhaft, den Träger so auszubilden, daß das Fehlerkontrollsignal Eₖ erst nach dem durch Luft übertragenen Empfangssignal E₂ am Empfangswandler 28 eintrifft, weil es andernfalls schwierig ist, zu vermeiden, daß sich die im Empfangssignal Eₖ enthaltenen Störsignale in den Bereich eines der Zeitfenster T₁ und T₂ erstrecken.

Für die Ultraschallwandler 24 und 28 werden vorzugsweise piezoelektrische Wandler verwendet. Ein piezoelektrischer Wandler enthält in bekannter Weise eine Scheibe aus einem Piezokristall, auf dessen beide Seiten Metallisierungen aufgebracht sind, die als Elektroden dienen. Wenn an die Elektroden eine Wechselspannung angelegt wird, wird der Piezokristall zu mechanischen Schwingungen mit der Frequenz der Wechselspannung angeregt, und wenn auf den Piezokristall mechanische Schwingungen übertragen werden, erzeugt er zwischen den Elektroden eine Wechselspannung mit der Frequenz der mechanischen Schwingungen. Bei dem Sensor 10 von Fig. 1 ist jeweils eine Elektrode jedes Wandlers 24, 28 mit der den Zwischenraum 20 begrenzenden Metallwand des Gehäuses 14 verbunden, die zugleich als Masseanschluß dient, während die andere Elektrode des Wandlers 24 über die Leitung 30 mit der Erregungsschaltung 32 und die andere Elektrode des Wandlers 28 über die Leitung 34 mit der Auswerteschaltung 36 verbunden ist.

Bei der Verwendung von herkömmlichen piezoelektrischen Wandlern in dem beschriebenen Sensor besteht jedoch das Problem, daß die Abmessungen der Wandler um so größer sein müssen, je niedriger die Betriebsfrequenz ist. Gemäß einer bevorzugten Ausführungsform der Erfindung werden deshalb piezoelektrische Wandler verwendet, die aus einer porösen piezoelektrischen Keramik mit der Konnektivität 3-3 bestehen.

Der Begriff der "Konnektivität" (englisch "connectivity") wurde von R. E. Newnham zur Kennzeichnung der Strukturen von mehrphasigen Feststoffen eingeführt und auch auf elektrokeramische Verbundwerkstoffe angewendet (R. E. Newnham "Composite Electroceramics", Ferroelectrics 1986, Vol. 68, S. 1-32). Die Konnektivität bezeichnet die Raumrichtungen in einem dreidimensionalen rechtwinkligen Koordinatensystem, in denen die Bestandteile jeder Phase miteinander durchgehend verbunden sind. Die Ziffer 0 bedeutet, daß die Bestandteile einer Phase in keiner Raumrichtung miteinander durchgehend verbunden sind, die Ziffer 1 bedeutet, daß die Bestandteile einer Phase in nur einer Raumrichtung miteinander durchgehend verbunden sind, usw. Die "Konnektivität 3-3" bedeutet, daß bei einem zweiphasigen Feststoff die Bestandteile jeder der beiden Phasen in allen drei Raumrichtungen miteinander durchgehend verbunden sind.

In dem Aufsatz "Dielectric, elastic and piezoelectric properties of porous PZT ceramics" von W. Wersing, K. Lubitz und J. Mohaupt in Ferroelectrics 1986, Vol. 68, S. 77-97, wird der Begriff der Konnektivität auch auf poröse Keramikwerkstoffe angewendet, die als zweiphasige Feststoffe angesehen werden, bei denen die eine Phase vom Keramikwerkstoff und die andere Phase von den Poren gebildet ist. Bei einer porösen Keramik mit der Konnektivität 3-3 sind also sowohl der Keramikwerkstoff als auch die Poren in allen drei Raumrichtungen miteinander durchgehend verbunden.

Derartige piezoelektrische Wandler aus poröser piezoelektrischer Keramik mit der Konnektivität 3-3 können mit verhältnismäßig kleinen Abmessungen im niederfrequenten Ultraschallbereich zwischen etwa 100 und 300 kHz arbeiten und sind daher für die Verwendung in der zuvor beschriebenen Anordnung besonders gut geeignet. Ein weiterer Vorteil solcher piezoelektrischer Wandler liegt darin, daß ihre akustische Impedanz in der Größenordnung derjenigen des Materials des Sensorgehäuses liegt, so daß sie ohne Anpaßschicht eingesetzt werden können.

Was in der vorstehenden Beschreibung zu der Übertragung von Ultraschallwellen in Luft ausgesagt ist, gilt in gleicher Weise auch für die Übertragung von Ultraschallwellen in anderen Gasen. Das beschriebene Verfahren kann daher unverändert auch zur Überwachung des Füllstands in einem Behälter angewendet werden, dessen Leerraum anstatt Luft ein anderes Gas enthält. Die vorliegende Erfindung beschränkt sich jedoch gemäß der folgenden Ansprüche auf den Fall, daß der leerraum luft enthält.

## Patentansprüche

1. Verfahren zur Überwachung eines vorbestimmten Füllstands eines Füllguts in einem Behälter mit Hilfe von zwei Ultraschallwandlern (24,28),
die auf der Höhe des zu überwachenden Füllstands derart am Behälter montiert sind, dass zwischen ihnen ein Zwischenraum besteht, in den das Füllgut eintritt, wenn dieses den zu überwachenden Füllstand erreicht,
wobei der eine Ultraschallwandler ein Sendewandler (24) ist, der in vorbestimmten Sendezeitpunkten zur Aussendung von Ultraschallimpulsen in den Zwischenraum erregt wird,
während der andere Ultraschallwandler ein Empfangswandler (28) ist, der empfangene Ultraschallimpulse in elektrische Empfangssignale umwandelt, durch deren Auswertung festgestellt wird, ob sich Füllgut im Zwischenraum (20) zwischen den Ultraschallwandlern befindet,
**dadurch gekennzeichnet,**
**dass** der Sendewandler (24) zur Aussendung von Ultraschallimpulsen mit einer Frequenz erregt wird,
die so niedrig ist, dass die Ultraschallimpulse auch dann durch den Zwischenraum zu dem Empfangswandler übertragen werden, wenn der Zwischenraum (20) mit Luft gefüllt ist
**dass** ein Zeitfenster geöffnet wird, innerhalb dessen ein Zeitpunkt eines Eintreffens eines Empfangssignals bei Schallgeschwindigkeit in der Luft liegt und außerhalb dessen ein Zeitpunkt eines Eintreffens eines Empfangssignals bei Schallgeschwindigkeit im Füllgut liegt,
und
**dass** festgestellt wird, ob der Empfangswandler nach jedem Sendezeitpunkt ein Empfangssignal in einem Zeitabstand abgibt, der der Laufzeit der Ultraschallimpulse vom Sendewandler zum Empfangswandler in Luft entspricht.

2. Verfahren nach Anspruch 1, **dadurch gekennzeichnet, daß** die Frequenz der Ultraschallimpulse kleiner als 300 kHz ist.

3. Verfahren nach Anspruch 2, **dadurch gekennzeichnet, daß** die Frequenz der Ultraschallimpulse im Bereich von 100 bis 300 kHz liegt.

4. Verfahren nach einem der Ansprüche 1 bis 3 zur Überwachung eines vorbestimmten Füllstands einer Flüssigkeit in dem Behälter, **dadurch gekennzeichnet, daß** festgestellt wird, ob der Empfangswandler nach jedem Sendezeitpunkt ein Empfangssignal in einem Zeitabstand abgibt, der der Laufzeit der Ultraschallimpulse vom Sendewandler zum Empfangswandler in der Flüssigkeit entspricht.

5. Verfahren nach einem der vorhergehenden Ansprüche, **dadurch gekennzeichnet, daß** festgestellt wird, ob der Empfangswandler nach jedem Sendezeitpunkt ein Empfangssignal in einem Zeitabstand abgibt, der der Laufzeit der Ultraschallimpulse vom Sendewandler zum Empfangswandler über den Träger der beiden Wandler entspricht.

6. Anordnung zur Durchführung des Verfahrens nach einem der vorhergehenden Ansprüche,
mit zwei Ultraschallwandlern (24,28), die auf der Höhe des zu überwachenden Füllstands derart am Behälter montiert sind, dass zwischen ihnen ein Zwischenraum (20) besteht, in den das Füllgut eintritt, wenn dieses den zu überwachenden Füllstand erreicht,
wobei der eine Ultraschallwandler ein Sendewandler (24) ist, der so ausgebildet und angeordnet ist, dass er bei Erregung durch einen elektrischen Wechselspannungsimpuls einen Ultraschallimpuls in den Zwischenraum aussendet, während der andere Ultraschallwandler ein Empfangswandler (21) ist, der so ausgebildet und angeordnet ist, dass er vom Sendewandler ausgesendete und über den Zwischenraum (20) übertragene Ultraschallimpulse in elektrische Empfangssignale umwandelt,
mit einer Erregungsschaltung (32), die den Sendewandler (24) in vorbestimmten Sendezeitpunkten zur Aussendung von Ultraschallimpulsen erregt,
und mit einer Auswerteschaltung (36), die die vom Empfangswandler (28) gelieferten elektrischen Empfangssignale auswertet, um festzustellen, ob der Zwischenraum mit Füllgut gefüllt ist oder nicht,
**dadurch gekennzeichnet,**
**dass** die Erregungsschaltung den Sendewandler (24) zur Aussendung von Ultraschallimpulsen mit einer Frequenz erregt, die so niedrig ist, dass die Ultraschallimpulse auch dann durch den Zwischenraum zu dem Empfangswandler übertragen werden, wenn der Zwischenraum mit Luft gefüllt ist,
**dass** eine Torschaltung (46,48) vorgesehen ist, welche ein Zeitfenster öffnet, innerhalb dessen ein Zeitpunkt eines Eintreffens eines Empfangssignals bei Schallgeschwindigkeit in der Luft liegt und außerhalb dessen ein Zeitpunkt eines Eintreffens eines Empfangssignals bei Schallgeschwindigkeit im Füllgut liegt,
und **dass** die Auswerteschaltung eine Einrichtung enthält, die feststellt, ob der Empfangswandler nach jedem Sendezeitpunkt ein Empfangssignal in einem Zeitabstand abgibt, der der Laufzeit der Ultraschallimpulse vom Sendewandler zum Empfangswandler in Luft entspricht.

7. Anordnung nach Anspruch 6 zur Überwachung eines vorbestimmten Füllstands einer Flüssigkeit in dem Behälter **dadurch gekennzeichnet, daß** die Auswerteschaltung (36) eine Einrichtung enthält, die festellt, ob der Empfangswandler nach jedem Sendezeitpunkt ein Empfangssignal in einem Zeitabstand abgibt, der der Laufzeit der Ultraschallimpulse vom Sendewandler zum Empfangswandler in der Flüssigkeit entspricht.

8. Anordnung nach Anspruch 6 oder 7, **dadurch gekennzeichnet, daß** die Auswerteschaltung eine Einrichtung enthält, die festellt, ob der Empfangswandler nach jedem Sendezeitpunkt ein Empfangssignal in einem Zeitabstand abgibt, der der Laufzeit der Ultraschallimpulse vom Sendewandler zum Empfangswandler über den Träger der beiden Ultraschallwandler entspricht.

9. Anordnung nach Anspruch 8, **dadurch gekennzeichnet, daß** der Träger der beiden Ultraschallwandler so ausgebildet ist, daß die Laufzeit der Ultraschallimpulse vom Sendewandler (24) zum Empfangswandler (28) über den Träger größer als in Luft ist.

10. Anordnung nach einem der Ansprüche 6 bis 9, **dadurch gekennzeichnet, daß** die beiden Ultraschallwandler piezoelektrische Wandler sind, die aus einer porösen piezoelektrischen Keramik mit der Konnektivität 3-3 bestehen.

## Claims

1. A method for monitoring a predetermined fill level of a filling in a container with the aid of two ultrasonic transducers (24, 28)
which are mounted on the container at the level of the fill level to be monitored in such a way that a space exists between them, into which the filling enters when the said filling reaches the fill level to be monitored,
wherein one ultrasonic transducer is a transmitting transducer (24) which is excited at predetermined transmitting instants to emit ultrasonic pulses into the space,
whilst the other ultrasonic transducer is a receiving transducer (28) which converts the received ultrasonic pulses into electrical reception signals, by means of the evaluation of which it is determined whether filling is located in the space (20) between the ultrasonic transducers,
**characterised**
**in that** the transmitting transducer (24) is excited in order to emit ultrasonic pulses with a frequency
which is so low that the ultrasonic pulses are transmitted through the space to the receiving transducer even when the space (20) is filled with air,
**in that** a time window is opened, within which lies an instant of arrival of a reception signal at the speed of sound in the air and outside which lies an instant of arrival of a reception signal at the speed of sound in the filling,
and
**in that** it is determined whether the receiving transducer after each transmitting instant issues a reception signal at a time interval which corresponds to the travel time of the ultrasonic pulses from the transmitting transducer to the receiving transducer in air.

2. A method according to Claim 1, **characterised in that** the frequency of the ultrasonic pulses is smaller than 300 kHz.

3. A method according to Claim 2, **characterised in that** the frequency of the ultrasonic pulses is in the range of 100 to 300 kHz.

4. A method according to one of Claims 1 to 3 for monitoring a predetermined fill level of a fluid in the container, **characterised in that** it is determined whether the receiving transducer after each transmitting instant issues a reception signal at a time interval which corresponds to the travel time of the ultrasonic pulses from the transmitting transducer to the receiving transducer in the fluid.

5. A method according to one of the preceding Claims, **characterised in that** it is determined whether the receiving transducer after each transmitting instant issues a reception signal at a time interval which corresponds to the travel time of the ultrasonic pulses from the transmitting transducer to the receiving transducer via the support of the two transducers.

6. An arrangement for implementing the method according to one of the preceding Claims,
comprising two ultrasonic transducers (24, 28) which are mounted on the container at the level of the fill level to be monitored in such a way that a space (20) exists between them, into which the filling enters when the said filling reaches the fill level to be monitored,
wherein one ultrasonic transducer is a transmitting transducer (24) which is designed and arranged such that, when exited by means of an electrical alternating voltage pulse, it emits an ultrasonic pulse into the space,
whilst the other ultrasonic transducer is a receiving transducer (28) which is designed and arranged such that it converts the ultrasonic pulses emitted by the transmitting transducer and transmitted via the space (20) into electrical reception signals,
an excitation circuit (32) which excites the transmitting transducer (24) at predetermined transmitting instants to emit ultrasonic pulses,
and an evaluating circuit (36) which evaluates the electrical reception signals supplied by the receiving transducer (28) in order to determine whether the space is filled with filling or not,
**characterised**
**in that** the excitation circuit excites the transmitting transducer (24) to emit ultrasonic pulses with a frequency which is so low that the ultrasonic pulses are transmitted through the space to the receiving transducer even when the space is filled with air,
**in that** a gate circuit (46, 48) is provided which opens a time window, within which lies an instant of arrival of a reception signal at the speed of sound in the air and outside which lies an instant of arrival of a reception signal at the speed of sound in the filling,
and **in that** the evaluating circuit contains a device which determines whether the receiving transducer after each transmitting instant issues a reception signal at a time interval which corresponds to the travel time of the ultrasonic pulses from the transmitting transducer to the receiving transducer in air.

7. An arrangement according to Claim 6 for monitoring a predetermined fill level of a fluid in the container, **characterised in that** the evaluating circuit (36) contains a device which determines whether the receiving transducer after each transmitting instant issues a reception signal at a time interval which corresponds to the travel time of the ultrasonic pulses from the transmitting transducer to the receiving transducer in the fluid.

8. An arrangement according to Claim 6 or 7, **characterised in that** the evaluating circuit contains a device which determines whether the receiving transducer after each transmitting instant issues a reception signal at a time interval which corresponds to the travel time of the ultrasonic pulses from the transmitting transducer to the receiving transducer via the support of the two ultrasonic transducers.

9. An arrangement according to Claim 8, **characterised in that** the support of the two ultrasonic transducers is designed such that the travel time of the ultrasonic pulses from the transmitting transducer (24) to the receiving transducer (28) via the support is greater than in air.

10. An arrangement according to one of Claims 6 to 9, **characterised in that** the two ultrasonic transducers are piezoelectric transducers which are made of porous piezoelectric ceramics with the connectivity 3-3.

## Revendications

1. Procédé destiné à la surveillance d'un niveau prédéfini d'un produit au sein d'un réservoir à l'aide de deux convertisseurs ultrasonores (24, 28),
qui sont montés sur le réservoir, à la hauteur du niveau à surveiller, de telle manière qu'il existe entre eux un espace intermédiaire, dans lequel pénètre le produit lorsque ce dernier atteint le niveau à surveiller,
le premier convertisseur ultrasonore étant un convertisseur d'émission (24), qui est excité selon des instants d'émission prédéfinis pour l'émission d'impulsions ultrasonores dans l'espace intermédiaire,
tandis que le deuxième convertisseur est un convertisseur de réception (28), qui convertit les impulsions ultrasonores reçues en signaux de réception électriques, dont l'interprétation permet de déterminer si le produit se trouve dans l'espace intermédiaire (20) entre les deux convertisseurs ultrasonores,
**caractérisé en ce que**
le convertisseur d'émission (24) est excité pour l'émission d'impulsions ultrasonores à une fréquence,
qui est suffisamment basse pour que les impulsions ultrasonores soient transmises à travers l'espace intermédiaire (20) vers le convertisseur de réception (28), y compris lorsque l'espace intermédiaire (20) est rempli d'air,
**en ce qu'**une fenêtre de temps est ouverte, au sein de laquelle se trouve un instant d'une arrivée d'un signal de réception à la vitesse du son dans l'air et en dehors de laquelle se trouve un instant d'une arrivée d'un signal de réception à la vitesse du son dans le produit,
et
**en ce que** l'on détermine si le convertisseur de réception délivre après chaque instant d'émission un signal de réception dans un laps de temps, qui correspond au temps de propagation dans l'air des impulsions ultrasonores, du convertisseur d'émission (24) vers le convertisseur de réception (28).

2. Procédé selon la revendication 1, **caractérisé en ce que** la fréquence des impulsions ultrasonores est inférieure à 300 kHz.

3. Procédé selon la revendication 2, **caractérisé en ce que** la fréquence des impulsions ultrasonores se situe dans la plage de 100 à 300 kHz.

4. Procédé selon l'une des revendications 1 à 3, destiné à la surveillance d'un niveau prédéfini d'un liquide au sein d'un réservoir, **caractérisé en ce que** l'on détermine si le convertisseur de réception délivre après chaque instant d'émission un signal de réception dans un laps de temps, qui correspond au temps de propagation dans le liquide des impulsions ultrasonores, du convertisseur d'émission (24) vers le convertisseur de réception (28).

5. Procédé selon l'une des revendications précédentes, **caractérisé en ce que** l'on détermine si le convertisseur de réception délivre après chaque instant d'émission un signal de réception dans un laps de temps, qui correspond au temps de propagation des impulsions ultrasonores du convertisseur d'émission vers le convertisseur de réception à travers le support des deux convertisseurs.

6. Configuration destinée à la réalisation du procédé selon l'une des revendications précédentes,
dotée de deux convertisseurs ultrasonores (24, 28), qui sont montés sur le réservoir à la hauteur du niveau à surveiller, de telle manière qu'il existe entre eux un espace intermédiaire (20), dans lequel pénètre le produit lorsque celui-ci atteint le niveau à surveiller, le premier convertisseur ultrasonore étant un convertisseur d'émission (24), qui est constitué et disposé de telle manière à émettre, en cas d'excitation par une impulsion de tension électrique alternative, une impulsion ultrasonore dans l'espace intermédiaire (20), tandis que le deuxième convertisseur ultrasonore est un convertisseur de réception (28), qui est constitué et disposé de telle manière à convertir en signaux de réception électriques les impulsions ultrasonores émises par le convertisseur d'émission (24) et transmises à travers l'espace intermédiaire (20), dotée d'un circuit d'excitation (32), qui excite le convertisseur d'émission (24) en vue de l'émission d'impulsions ultrasonores en des instants d'émission prédéfinis,
et dotée d'un circuit d'exploitation (36), qui exploite les signaux de réception électriques fournis par le convertisseur de réception (28), afin de déterminer si l'espace intermédiaire (20) est rempli ou non de produit,
**caractérisée en ce que**
le circuit d'excitation (32) excite le convertisseur d'émission (24) en vue de l'émission d'impulsions ultrasonores avec une fréquence, qui est suffisamment basse pour que les impulsions ultrasonores soient transmises à travers l'espace intermédiaire (20) vers le convertisseur de réception (28), y compris lorsque l'espace intermédiaire (20) est rempli d'air,
**en ce qu'**est prévu un circuit de porte (46, 48), qui ouvre une fenêtre de temps, au sein de laquelle se trouve un instant d'une arrivée d'un signal de réception à la vitesse du son dans l'air et en dehors de laquelle se trouve un instant d'une arrivée d'un signal de réception à la vitesse du son dans le produit,
et **en ce que** le circuit d'exploitation (36) contient un dispositif, qui détermine si le convertisseur de réception (28) délivre après chaque instant d'émission un signal de réception dans un laps de temps, qui correspond au temps de propagation dans l'air des impulsions ultrasonores, du convertisseur d'émission (24) vers le convertisseur de réception (28).

7. Configuration selon la revendication 6, destinée à la surveillance d'un niveau prédéfini d'un liquide au sein d'un réservoir, **caractérisée en ce que** le circuit d'exploitation (36) contient un dispositif, qui détermine si le convertisseur de réception (28) délivre après chaque instant d'émission un signal de réception dans un laps de temps, qui correspond au temps de propagation dans le liquide des impulsions ultrasonores, du convertisseur d'émission (24) vers le convertisseur de réception (28).

8. Configuration selon la revendication 6 ou 7, **caractérisée en ce que** le circuit d'exploitation (36) contient un dispositif, qui détermine si le convertisseur de réception (28) délivre après chaque instant d'émission un signal de réception dans un laps de temps, qui correspond au temps de propagation des impulsions ultrasonores du convertisseur d'émission (24) vers le convertisseur de réception (28) à travers le support des deux convertisseurs.

9. Configuration selon la revendication 8, **caractérisée en ce que** le support des convertisseurs ultrasonores est conçu de telle sorte que le temps de propagation des impulsions ultrasonores du convertisseur d'émission (24) vers le convertisseur de réception (28) à travers le support est supérieur à celui dans l'air.

10. Configuration selon l'une des revendications 6 à 9, **caractérisée en ce que** les deux convertisseurs ultrasonores sont des convertisseurs piézoélectriques, qui sont constitués d'une céramique piézoélectrique poreuse de connectivité 3-3.
